# EUROPÄISCHE PATENTANMELDUNG

(11) **EP 3 859 326 A1**
(43) Veröffentlichungstag der Anmeldung: **04.08.2021**
(21) Anmeldenummer: 20155178.5
(22) Anmeldetag: 03.02.2020
(51) Int. Cl.: G01N 27/83, G01M 17/02

(54) **SYSTEM ZUR INSPEKTION VON FLÄCHIGEM GEWEBE MIT DRAHTFÖRMIGEN UND ELEKTRISCH LEITFÄHIGEN STABILISIERUNGS- UND/ODER STÜTZSTRUKTUREN MITTELS EINES INDUKTIVEN MAGNETFELDSENSORS**

(71) Anmelder: Roland Electronic GmbH, 75210 Keltern-Ellmendingen (DE)
(72) Erfinder: Rott, Philipp, 75015 Bretten (DE)
(74) Vertreter: Klocke, Peter

(57) **Zusammenfassung**

System zur Inspektion von flächigem Gewebe mit einer regelmäßigen Anordnung im Wesentlichen parallel verlaufender sowie in der Gewebefläche angeordneter, drahtförmiger und elektrisch leitfähiger Stabilisierungs- und/oder Stützstrukturen, umfassend zumindest einen induktiven Magnetfeldsensor, Mittel zum Auswerten von Signalen des Magnetfeldsensors und Mittel zum Einstellen von Parametern, Schwellenwerten oder dergleichen für die Auswertung von Signalen des Magnetfeldsensors, wobei der zumindest eine induktive Magnetfeldsensor an einer Messstelle in einem Messbereich in einem definierten und/oder definierbaren Abstand zu einer regulären Fläche im Raum angeordnet ist und über diese reguläre Fläche mit einer Geschwindigkeit v zumindest ein Stück flächigen Gewebes, das flächig in oder auf der regulären Fläche angeordnet ist, entlang eines stetigen Transportweges mit einer (lokalen) Transportrichtung an dem Messbereich entlang geführt wird oder führbar ist. Erfindungsgemäß wird dabei mittels Induktion in den Stabilisierung- und/oder Stützstrukturen in der Spule ein gegeninduktives Antwortsignal zu erzeugen, wobei sukzessive im Wesentlichen nur ein Antwortsignal durch magnetische Induktion in einer der Stabilisierung- und/oder Stützstrukturen gleichzeitig erzeugbar ist oder erzeugt wird.

## Beschreibung

Die Erfindung betrifft ein System zur Inspektion von flächigem Gewebe mit einer regelmäßigen Anordnung im Wesentlichen parallel verlaufender sowie in der Gewebefläche angeordneter, drahtförmiger und elektrisch leitfähiger Stabilisierungs- und/oder Stützstrukturen, umfassend zumindest einen induktiven Magnetfeldsensor, Mittel zum Auswerten von Signalen des Magnetfeldsensors und Mittel zum Einstellen von Parametern, Schwellenwerten oder dergleichen für die Auswertung von Signalen des Magnetfeldsensors, wobei der zumindest eine induktive Magnetfeldsensor an einer Messstelle in einem Messbereich in einem definierten und/oder definierbaren Abstand zu einer regulären Fläche im Raum angeordnet ist und über diese reguläre Fläche mit einer Geschwindigkeit v zumindest ein Stück flächigen Gewebes, das flächig in oder auf der regulären Fläche angeordnet ist, entlang eines stetigen Transportweges mit einer (lokalen) Transportrichtung an dem Messbereich entlang geführt wird oder führbar ist.

Dabei wird unter einer regulären Fläche eine Fläche im dreidimensionalen Raum verstanden, bei der an jeden Punkt in der respektive der Fläche eine Tangentialebene angelegt werden kann. Eine solche reguläre Fläche muss kein Teil (etwa eine Oberfläche) eines physischen Objektes sein, eine solche Fläche kann auch rein virtuell als gedankliche Hilfskonstruktion verstanden werden. Der Begriff "flächig" in Bezug auf ein flächiges Gewebe ist dann so zu verstehen, dass bei vollständig liegender Anordnung des flächigen Gewebes in bzw. auf einer regulären Fläche die Erstreckung des flächigen Gewebes senkrecht zu der Ebene, d. h, die Dicke des flächigen Gewebes, in jedem beliebigen Punkt klein ist gegenüber der Erstreckung des flächigen Gewebes innerhalb bzw. auf der regulären Fläche. Eine alternative Bezeichnung für "flächiges Gewebe" wäre dementsprechend etwa "Gewebeschicht". Entsprechend der allgemein möglichen Anordnung des flächigen Gewebes in bzw. auf einer regulären Fläche, die zumindest eine (stetige) Krümmung, Wölbung oder dergleichen aufweisen kann, kann das flächige Gewebe im Allgemeinen auch dementsprechend zumindest eine (stetige) Krümmung, Wölbung oder dergleichen aufweisen. Die (lokale) Transportrichtung ist dabei vom Ort entlang des allgemein als nicht geradlinig angenommen Transportweges abhängig. Gegebenenfalls ist die (lokale) Transportrichtung zusätzlich (explizit) zeitabhängig. Der im Rahmen der Erfindungsbeschreibung verwendete Begriff der "Breite" bezogen auf flächiges Gewebe ist als Länge einer Schnittlinie durch das flächige Gewebe in einer Ebene senkrecht zu der (lokalen) Transportrichtung zu verstehen. Die Breite flächigen Gewebes ist typischerweise innerhalb von gewissen Toleranzen entlang des Transportweges räumlich und zeitlich konstant.

Ohne Beschränkung der Allgemeinheit wird der Einfachheit halber im Folgenden zumeist, d. h., sofern nicht gesondert Abweichendes erwähnt wird, vorausgesetzt, dass die reguläre Fläche eine ebene Fläche und der Transportweg geradlinig sind. Grundsätzlich sind alle für den speziellen Fall einer ebenen Fläche und/oder eines geradlinigen Transportweges getroffenen Aussagen auf eine allgemeine reguläre Fläche, die zumindest eine (stetige) Krümmung, Wölbung oder dergleichen aufweist, und/oder einen nicht geradlinigen Transportweg verallgemeinerbar. Unter der vorstehenden erläuterten Vereinfachung ist die lokale Transportrichtung an jedem Punkt des Transportweges identisch und damit zugleich eine globale Transportrichtung bezüglich des gesamten geradlinigen Transportweges. Des Weiteren seien die Stabilisierungs- und/oder Stützstrukturen in dem flächigen Gewebe im Wesentlichen senkrecht zu der Transportrichtung und damit parallel zu der Breite des flächigen Gewebes. Bei der vorstehend beschriebenen Anordnung flächigen Gewebes in/auf einer ebenen Fläche respektive Ebene verlaufen die drahtförmigen und elektrisch leitfähigen Stabilisierungs- und/oder Stützstrukturen im Ideal- bzw. Sollzustand typischerweise, aber weder notwendigerweise noch zwingend, geradlinig. Im Allgemeinen können die Stabilisierungs- und/oder Stützstrukturen etwa auch in einem beliebigen, von null verschiedenen spitzen Winkel zu der Transportrichtung bzw. zu der Breite des flächigen Gewebes verlaufen.

Derartiges flächiges Gewebe mit einer regelmäßigen Anordnung im Wesentlichen parallel verlaufender sowie in der Gewebefläche angeordneter, drahtförmiger und elektrisch leitfähiger Stabilisierungs- und/oder Stützstrukturen ist unter anderem aus der Herstellung von Reifen für Lastkraftfahrzeuge (LKW) und Kraftfahrzeuge (KFZ) bekannt und ist ein Halbzeug unter anderem für die Ausbildung des tragenden Gerüst (Karkasse) in derartigen Reifen. Zudem ist es etwa auch im Hinblick auf Transportbänder, Förderbänder oder dergleichen bekannt. In Bezug auf die Reifenherstellung bezeichnet man dieses flächige Gewebe üblicherweise als Reifencord oder entsprechend dem typischerweise verwendeten Material für die die Stabilisierungs- und/oder Stützstrukturen als Stahlcord.

Bei der Reifenherstellung werden als Halbzeuge gummierte Stahlcordstreifen verwendet, bei denen in einer dünnen Gummischicht als flächiges Gewebe Stahldrähte oder Stahllitzen als Stabilisierungs- und/oder Stützstrukturen in Cordlage angeordnet sind, also parallel zueinander verlaufen. Neben der Herstellung von Karkassen für LKW/PKW-Reifen werden derartige Stahlcordstreifen bei der Gürtelherstellung sowie auch für weitere Reifeneinlagen verwendet. Es ist dabei für die Qualität des Endprodukts essentiell, dass die Stahlcordstreifen keine Defekte aufweisen. Typische auftretende Fehler respektive Defekte im Stahlcord sind dabei etwa an einer oder mehreren Stellen fehlende Stabilisierungs- und/oder Stützstrukturen, doppelte (zu eng aneinander liegende) Stabilisierungs- und/oder Stützstrukturen, zumindest an einer Stelle überlappende und/oder überkreuzende Stabilisierungs- und/oder Stützstrukturen oder auch eine unregelmäßige lokale und/oder globale Verteilung der Stabilisierungs- und/oder Stützstrukturen im Stahlcord. Bei einer Kontrolle als defekt erkannte Bereiche im Stahlcord können dann im Produktionsprozess entfernt, insbesondere bereichsweise herausgeschnitten, werden. Als eher rudimentäre Kontrollen werden zur Erkennung derartiger Defekte optische, visuelle Oberflächenkontrollen durchgeführt, die jedoch nicht sehr zuverlässig sind. Es werden zudem Röntgenanlagen verwendet, deren Einsatz allerdings einen enormen Aufwand darstellt und deren Anschaffung sowie Betrieb sehr kostenintensiv ist.

Des Weiteren sind aus dem Stand der Technik Verfahren und entsprechende Vorrichtungen zur Erkennung von Defekten in Stahlcordmaterial basierend auf Magnetfeldstreuverfahren bekannt. Exemplarisch sei diesbezüglich auf die EP 0 580 024 A1 verwiesen. Unter Verwendung derartiger Verfahren sind allerdings selbst die eindeutigsten, weil am ehesten zuverlässig zu erkennenden, Defekte, nämlich Fehlstellen, regelmäßig nicht mit einer derartigen Zuverlässigkeit erkennbar, sodass eine vollständige Automatisierung der Kontrolle des flächigen Gewebes in Anbetracht der zu erwartenden Fehlerkennungen bei der Kontrolle selbst vertretbar wäre. Dann würden bei der Inspektion von Stahlcord also einerseits Fehlerkennungen vermeintlicher Defekte und andererseits Nichterkennung tatsächlicher Defekte, die zu Qualitätsmängeln im Endprodukt führen, mit einer ausreichend geringen Häufigkeit auftreten, sodass diese im Rahmen einer akzeptablen Fehlerkennungstoleranz liegen. Tatsächlich hängt die Häufigkeit von Fehlerkennungen von Defekten bei der Inspektion von Stahlcord maßgeblich an der Fähigkeit und der Erfahrung von Bedienern entsprechender, aus dem Stand der Technik bekannter Vorrichtungen zur Inspektion von Stahlcord basierend auf Magnetfeldstreuverfahren, in Abhängigkeit von dem jeweiligen zu inspizierenden Stahlcordmaterial geeignete Voreinstellungen, Parameter, Schwellenwerte oder dergleichen für die Inspektion des Stahlcordmaterials zu wählen und damit die Häufigkeit von Fehlerkennungen zu minimieren.

Der vorliegenden Erfindung liegt daher die Aufgabe zu Grunde, eine kostengünstige Vorrichtung vorzuschlagen, die eine (sukzessive) Inspektion von einzelnen Stücken flächigem Gewebes oder eines aus einzelnen Stücken flächigen Gewebes zusammengefügten entsprechenden Gewebebands mit einer regelmäßigen Anordnung im Wesentlichen parallel verlaufender sowie in der Gewebefläche angeordneter, drahtförmiger und elektrisch leitfähiger Stabilisierungs- und/oder Stützstrukturen vorzuschlagen, die eine zuverlässige Erkennung aller gängigen Defekte bei der Anordnung respektive Einbettung der Stabilisierungs- und/oder Stützstrukturen in das flächige Gewebe anhand in Abhängigkeit von dem zu inspizierenden flächigen Gewebe global vorgegebener und/oder vorgebbarer Parameter, Schwellenwerte oder dergleichen und zudem die vollständige Automatisierung der Inspektion ermöglicht.

Die Aufgabe wird erfindungsgemäß von einem System zur Inspektion von flächigem Gewebe nach Anspruch 1 gelöst. Weitere vorteilhafte Ausgestaltungsvarianten sind den rückbezogenen Unteransprüchen zu entnehmen.

Demnach umfasst der zumindest eine induktive Magnetfeldsensor eines erfindungsgemäßen Systems zur Inspektion von flächigem Gewebe zumindest einen Permanentmagneten und wenigstens eine um den Permanentmagneten axial umlaufende Spule, wobei der induktive Magnetfeldsensor dazu ausgebildet ist, mittels Induktion in den Stabilisierungs- und/oder Stützstrukturen in der Spule ein gegeninduktives Antwortsignal zu erzeugen, wobei sukzessive im Wesentlichen nur ein Antwortsignal durch magnetische Induktion in einer der Stabilisierungs- und/oder Stützstrukturen gleichzeitig erzeugbar ist oder erzeugt wird. Das zu inspizierende flächige Gewebe wird mit einer Geschwindigkeit v in (lokaler) Transportrichtung an dem induktiven Magnetfeldsensor vorbeigeführt. Dabei werden die in dem flächigen Gewebe eingebetteten Stabilisierung- und/oder Stützstrukturen mit der Geschwindigkeit v durch das inhomogene Magnetfeld des Permanentmagneten des induktiven Magnetfeldsensors geführt. Sofern dabei der magnetische Fluss des Permanentmagneten und die Richtung der Geschwindigkeit v (lokale Transportrichtung) nicht parallel sind, wirkt auf Ladungsträger in den leitfähigen Stabilisierung- und/oder Stützstrukturen des flächigen Gewebes die Lorenzkraft und führt zu einer Beschleunigung beweglicher Ladungsträger in den Stabilisierung- und/oder Stützstrukturen.

Vorzugsweise werden die (lokale) Transportrichtung und die Ausrichtung des induktiven Magnetfeldsensors, insbesondere des Permanentmagneten im Hinblick auf die Magnetfeldgeometrie, wie auch die Ausrichtung der Stabilisierung- und/oder Stützstrukturen zur (lokalen) Transportrichtung und zur Magnetfeldgeometrie des Permanentmagneten so gewählt, dass die Wirkung der Lorentzkraft auf die beweglichen Ladungsträger in den Stabilisierung- und/oder Stützstrukturen maximal ist. Daher ist der Abstand zwischen einer Messstelle, an der ein induktiver Magnetfeldsensor eines erfindungsgemäßen Systems zur Inspektion von flächigem Gewebe in einem Messbereich angeordnet ist und einer regulären Fläche im Raum, in der bzw. über die ein flächiges Gewebe an dem Messbereich entlang geführt wird, bevorzugt entlang der Normalenrichtung der lokalen Flächennormalen an die reguläre Fläche definiert.

Eine Beschleunigung von Ladungsträgern in den leitfähigen Stabilisierung- und/oder Stützstrukturen bedingt durch die Lorentzkraft bedeutet einen elektrischen Strom, der wiederum die Ausbildung eines weiteren Magnetfeldes um eine jeweilige Stabilisierungs- und/oder Stützstruktur zur Folge hat. Dieses weitere Magnetfeld wirkt gemäß der Lenzschen Regel der Änderung des magnetischen Flusses des Magnetfeldes des Permanentmagneten aufgrund der Relativbewegung des Permanentmagneten und der Stabilisierungs- und/oder Stützstrukturen im flächigen Gewebe mit der Geschwindigkeit v entgegen. Der magnetische Fluss des Permanentmagneten ist zwar räumlich inhomogen, aber zeitinvariant, so dass ohne eine Relativbewegung von Permanentmagnet und der den Permanentmagneten axial umgebenden Spule in der Spule keine Induktion erfolgen kann. Die Induktion eines weiteren zeitlich veränderlichen Magnetfeldes in den Stabilisierungs- und/oder Stützstrukturen bedingt durch die Relativbewegung der Stabilisierungs- und/oder Stützstrukturen in dem flächigen Gewebe und des Permanentmagneten mit der Geschwindigkeit v ändert jedoch auch den magnetischen Fluss innerhalb der Spule und führt daher zu einer Induktion in der Spule, die gemessen werden kann.

Wird ein effektiv für eine Induktion in den Stabilisierungs- und/oder Stützstrukturen im flächigen Gewebe wirksame Kernbereich des Magnetfeldes bzw. des magnetischen Flusses des Permanentmagneten des induktiven Magnetfeldsensors in dem Bereich, in dem die Stabilisierungs- und/oder Stützstrukturen durch das Magnetfeld des Permanentmagneten geführt werden, also in dem Messbereich eines jeweiligen induktiven Magnetfeldsensors, derart beschränkt, dass im Wesentlichen lediglich in einer der Stabilisierung- und/oder Stützstrukturen eine Induktion erfolgt, dann sind in dem an der Spule abgreifbaren Antwortsignal (Messsignal) die einzelnen, sukzessive an dem induktiven Magnetfeldsensor vorbei geführten Stabilisierungs- und/oder Stützstrukturen eindeutig identifizierbar und unterscheidbar. In einem idealen Fall bei absolut idealer (homogener) Verteilung der Stabilisierungs- und/oder Stützstrukturen im inspizierten flächigen Gewebe ohne Vorliegen irgendwelcher Fehler respektive Defekte oder Abweichungen vom Sollzustand würde das an der Spule abgreifbare Antwortsignal bei graphischer Darstellung in Abhängigkeit von der Zeit einen sinusförmigen Verlauf (sinusförmige Wechselspannung) aufweisen. Die Frequenz des Signals wäre dann abhängig von der Geschwindigkeit v, mit das zu inspizierende flächige Gewebe in der (lokalen) Transportrichtung an dem induktiven Magnetfeldsensor vorbei geführt wird.

Aus dem Abstand der Maxima in einer entsprechenden graphischen Darstellung lässt sich in Kenntnis der Geschwindigkeit v (entweder vorgegeben oder vorgebbar, alternativ zusätzlich gemessen oder messbar) der Abstand der Stabilisierungs- und/oder Stützstrukturen in dem inspizierten flächigen Gewebe bestimmen. In der Realität gibt es mehr oder minder große Abweichungen von dem vorstehend beschriebenen idealen Fall. Eine automatisierte Auswertung des an dem induktiven Magnetfeldsensor abgreifbaren Antwortsignals setzt daher die Vorgabe von Toleranzen in Form von Parametern, Schwellenwerten oder dergleichen in Abhängigkeit der genauen Ausbildung des jeweiligen inspizierten oder zu inspizierenden flächigen Gewebes für eine Auswertung des Signals voraus, da nicht jede Abweichung vom idealen Fall zugleich auch tatsächlich einen Fehler respektive Defekt in dem inspizierten flächigen Gewebe bedeutet. Entscheidend dabei ist, dass durch die Identifizierbarkeit und eindeutige Unterscheidbarkeit der Stabilisierungs- und/oder Stützstrukturen in einem inspizierten oder zu inspizierenden flächigen Gewebe eine zusätzliche Kontrolle und/oder ein Eingreifen eines Bedieners oder dergleichen nur in Ausnahmefällen notwendig ist. Ebenso ist auch keine mehr oder minder zuverlässige Erfahrung, Intuition oder "Bauchgefühl" eines Bedieners oder dergleichen bei der Wahl geeigneter Parameter oder Schwellenwerte für eine korrekte Auswertung und zuverlässige Erkennung von Fehlern respektive Defekten bezüglich der Anordnung der Stabilisierung- und/oder Stützstrukturen im flächigen Gewebe bei gleichzeitiger Vermeidung von Fehlerkennungen von Defekten notwendig. Die Parameter oder Schwellenwerte können für ein bestimmtes zu inspizierendes flächiges Gewebe global vorgegeben werden. Es sei noch angemerkt, dass das reale Antwortsignal eines induktiven Magnetfeldsensors eines erfindungsgemäßen Systems zur Inspektion von flächigem Gewebe vor der eigentlichen Auswertung gegebenenfalls erst noch verstärkt, gefiltert, geglättet wird oder dergleichen. Das Signal kann dann etwa auf einer Anzeige oder dergleichen grafisch Dargestellt werden.

Gemäß einer weiteren bevorzugten Ausgestaltungsvariante ist ein erfindungsgemäßes System zur Inspektion von flächigem Gewebe zur Erkennung zumindest eines der folgenden Defekte im flächigen Gewebe ausgebildet:
a. Das Fehlen wenigstens einer der Stabilisierungs- und/oder Stützstrukturen;
b. Ein Überkreuzen zumindest zweier benachbarter Stabilisierung- und/oder Stützstrukturen an wenigstens einer Stelle im Gewebe;
c. Eine globale Abweichung der vorgesehen Liniendichte der Stabilisierungs- und/oder Stützstrukturen in einem bestimmten Stück Gewebe innerhalb gewisser vorgegebener und/oder vorgebbarer Grenzen entlang des Transportweges;
d. Eine lokale Abweichung der vorgesehenen Liniendichte der Stabilisierungs- und/oder Stützstrukturen in einem definierten und/oder definierbaren Bereich innerhalb gewisser vorgegebener oder vorgebbarer Grenzen entlang des Transportweges;
e. Eine lokale Abweichung des vorgesehenen parallelen Verlaufs der Stabilisierung- und/oder Stützstrukturen zumindest in einem lateralen Randbereich eines Stücks Gewebe;
f. Eine Lageabweichung zumindest einer der Stabilisierung- und/oder Stützstrukturen in vertikaler Richtung zu der regulären Fläche, in der sich das Stück Gewebe befindet, innerhalb gewisser vorgegebener oder vorgebbarer Grenzen.

Wie bereits angedeutet, lässt sich der Abstand direkt benachbarter und/oder auch nicht direkt benachbarter Stabilisierungs- und/oder Stützstrukturen in einem mit einem erfindungsgemäßen System zur Inspektion von flächigem Gewebe inspizierten flächigen Gewebe aus dem Abstand der Maxima in dem an dem oder den induktiven Magnetfeldsensoren abgegriffenen Antwortsignal bestimmen. Ist dabei der Abstand direkt benachbarter Stabilisierungs- und/oder Stützstrukturen, also benachbarter Maxima in der Antwortfunktion, (innerhalb gewisser Toleranzen) doppelt so groß wie der entsprechend für das inspizierte Gewebe vorgegebene Sollabstand direkt benachbarter Stabilisierungs- und/oder Stützstrukturen, dann fehlt an dieser Stelle eine der Stabilisierungs- und/oder Stützstrukturen, was bei der Inspektion des flächigen Gewebes eben entsprechend in einem fehlenden Maximum in dem Antwortsignal resultiert.

Liegen zwei direkt benachbarte Maxima in der Antwortfunktion deutlich enger aneinander als der für das inspizierte Gewebe vorgesehene Sollabstand vorgibt, dann liegen zwei benachbarte Stabilisierungs- und/oder Stützstrukturen zu eng aneinander. Je nachdem wie sich das zu den weiteren Nachbarmaxima in der Antwortfunktion verhält, kann dabei noch unterschieden werden, ob es sich dabei um eine überzählige Stabilisierungs- und/oder Stützstruktur handelt oder ob die betreffende Stabilisierungs- und/oder Stützstruktur nur von der regelmäßigen Anordnung der Stabilisierungs- und/der Stützstrukturen im inspizierten flächigen Gewebe, also von der Sollperiodizität, abweicht. Im letzteren Fall müsste den zu eng aufeinanderfolgenden direkt benachbarten Maxima in dem Antwortsignal eine entsprechend größere Lücke zwischen weiteren (zweiten) benachbarten Maxima entweder direkt vorhergehen oder unmittelbar nachfolgen. Bei einer überzähligen Stabilisierungs- und/oder Stützstruktur müssten drei aufeinanderfolgende benachbarte Maxima in dem Antwortsignal einen gegenüber dem Soll-Abstand zu geringen Abstand aufweisen, sofern immerhin die direkten Nachbarn der überzähligen Stabilisierungs- und/oder Stützstruktur innerhalb der Toleranz korrekt in dem inspizierten flächigen Gewebe eingebettet sind.

Im Falle abweichend von dem Sollwert ungewöhnlich nahe beieinander liegender Stabilisierungs- und/oder Stützstrukturen können in dem Antwortsignal eigentlich benachbarte und eindeutig unterscheidbare Maxima zumindest teilweise verschmelzen. Damit ist klar, das sich das Kriterium, dass im Wesentlichen nur ein Antwortsignal durch magnetische Induktion in einer der Stabilisierung- und/oder Stützstrukturen gleichzeitig erzeugbar ist oder erzeugt wird, erst einmal nur auf den Sollzustand eines mittels eines erfindungsgemäßen Systems zur Inspektion von flächigem Gewebe zu inspizierenden oder inspizierten flächigen Gewebes, nicht aber auf einen möglicherweise defekten respektive fehlerbehafteten Istzustand des entsprechenden flächigen Gewebes beziehen kann.

Zwei überkreuzende Stabilisierungs- und/oder Stützstrukturen würden im Bereich der Überkreuzung ein Antwortsignal zur Folge habe, bei dem ein ungewöhnlich hohes Maximum zu beobachten wäre aufgrund von Induktion in zwei Stabilisierungs- und/oder Stützstrukturen zugleich, aber die beiden Stützstrukturen nicht mehr im Antwortsignal zu unterscheiden wären, nicht zuletzt auch deshalb, da sie im Überkreuzungsbereich vertikal übereinander laufen. Zugleich gäbe es, in der Annahme das die der Überkreuzungsstelle beiderseits direkt benachbarten weiteren Stabilisierungs- und/oder Stützstrukturen innerhalb der Toleranzen korrekt in das inspizierte flächige Gewebe eingebettet sind, zusätzlich auch noch eine Abweichung in dem Abstand des übergroßen Maxima zu den beiderseits direkt benachbarten, normalgroßen Maxima in dem Antwortsignal. Damit ist auch eine Überkreuzung von Stabilisierungs- und/oder Stützstrukturen eindeutig identifizierbar.

Es sind natürlich grundsätzlich auch kompliziertere Kombinationen etwa von fehlenden, überzähligen und/oder aus der Periodizität der Anordnung abweichenden Stabilisierungs- und/oder Stützstrukturen möglich. Dabei muss dann die Periodizität der Anordnung, also die Periodizität der Maxima in der Antwortfunktion in einem größeren Teilbereich oder auch über ein gesamtes Stück flächigen Gewebes entlang des Transportweges insgesamt ausgewertet werden. Dabei erhält man auch Informationen über die Liniendichte, also die Anzahl an Stabilisierungs- und/oder Stützstrukturen pro Längeneinheit des inspizierten flächigen Gewebes entlang des Transportweges und eventuelle lokale (auf einen Teilbereich eines Gewebestücks entlang des Transportweges bezogen) oder globale (auf das gesamte Gewebestück entlang des Transportweges bezogen) Abweichungen von einem entsprechenden Sollwert.

Aus der Höhe der Maxima in dem Antwortsignal kann auch auf die vertikale Lage der Stabilisierungs- und/oder Stützstrukturen senkrecht zu der regulären Fläche geschlossen werden, in der bzw. auf der ein zu inspizierenden flächiges Gewebe an zumindest einem induktiven Magnetfeldsensor eines erfindungsgemäßen Systems zur Inspektion von flächigem Gewebe entlang geführt wird. Abweichungen in der Vertikalen bedeuten einen kleineren oder größeren Abstand zwischen dem induktiven Magnetfeldsensor und der jeweiligen Stabilisierungs- und/oder Stützstruktur in einem inspizierten flächigen Gewebe. Je näher die betreffende Stabilisierungs- und/oder Stützstruktur an dem induktiven Magnetfeldsensor ist, desto größer ist die auf die Stabilisierungs- und/oder Stützstruktur wirksame abstandsabhängige magnetische Flussdichte des Permanentmagneten des induktiven Magnetfeldsensors und dementsprechend stärker ist die Antwort aufgrund der Induktion in der entsprechenden Stabilisierungs- und/oder Stützstruktur.

Eine lokale Abweichung des vorgesehenen parallelen Verlaufs der Stabilisierung- und/oder Stützstrukturen zumindest in einem lateralen Randbereich eines Stücks Gewebe lässt sich nur unter Vorsehung mehrere induktiver Magnetfeldsensoren bei einem erfindungsgemäßen System zur Inspektion von flächigem Gewebe ermitteln, wobei die induktiven Magnetfeldsensoren über die Breite senkrecht zur (lokalen) Transportrichtung verteilt respektive voneinander beabstandet angeordnet sind, da hierfür ein Vergleich der Antwortsignale, insbesondere hinsichtlich der Lage der Maxima entlang des Transportweges, aus verschiedenen entlang der Breite angeordneter Messbereiche notwendig ist. Sind dann Abweichungen zwischen den Antwortsignalen in den verschiedenen Messbereichen in der Breite hinsichtlich der Lage der Maxima der jeweiligen Antwortsignale untereinander entlang des Transportweges feststellbar, so verlaufen die entsprechenden Stabilisierung- und/oder Stützstrukturen, denen diese Maxima zuordenbar sind, nicht parallel in der Breite des inspizierten flächigen Gewebes.

Dementsprechend ist gemäß einer weiteren präferierten Ausgestaltungsvariante eines erfindungsgemäßen Systems zur Inspektion von flächigem Gewebe eine Anordnung aus mindestens zwei induktiven Magnetfeldsensoren vorgesehen, wobei die induktiven Magnetfeldsensoren in einer Ebene senkrecht zu der (lokalen) Transportrichtung zueinander beabstandet angeordnet oder anordenbar sind.

Eine weitere begünstigte Ausgestaltungsvariante eines erfindungsgemäßen Systems zur Inspektion von flächigem Gewebe umfasst eine Anordnung aus mindestens zwei induktiven Magnetfeldsensoren, wobei die induktiven Magnetfeldsensoren entlang des Transportweges zueinander beabstandet angeordnet oder anordenbar sind.

Nach einer zusätzlichen besonders präferierten Ausgestaltungsvariante eines erfindungsgemäßen Systems zur Inspektion von flächigem Gewebe weist das System eine Anordnung von induktiven Magnetfeldsensoren in zumindest zwei entlang des Transportweges beabstandeten Ebenen, wobei die (lokale) Transportrichtung senkrecht zu der jeweiligen Ebene ist, derart auf, dass bei einer Projektion der jeweiligen Messbereiche aller in den Ebenen angeordneter induktiver Magnetfeldsensoren auf eine Schnittlinie durch das flächige Gewebe senkrecht zu einer (lokalen) Transportrichtung die Projektion wenigstens die gesamte Breite eines Stücks flächigen Gewebes abdeckt. Die Schnittlinie ist dabei vorzugsweise in einer der Ebenen definiert, in der sich zumindest einer der induktiven Magnetfeldsensoren der entsprechenden Anordnung von induktiven Magnetfeldsensoren befindet.

Eine solche Anordnung ermöglicht die Inspektion eines flächigen Gewebes in seiner ganzen Breite in einem Durchlauf. Sieht man in der Breite des flächigen Gewebes dabei eine Vielzahl von induktiven Magnetfeldsensoren mit einer in der Breite relativ kleinen Ausdehnung der jeweiligen, in der Projektion auf die Breite zumindest aneinander angrenzender und/oder auch wenigstens teilweise überlappender Messbereiche vor, so lässt sich aus geeigneter Auswertung, Zusammenführung und Darstellung der Antwortsignale der induktiven Magnetfeldsensoren bei Inspektion eines flächigen Gewebes eine quasi röntgenbildähnliche Darstellung der im inspizierten flächigen Gewebe angeordneten Stabilisierungs- und/oder Stützstrukturen gewinnen. Gemäß einer ganz besonders präferierten Ausgestaltungsvariante ist daher eine Auswertung und/oder Aufbereitung und/oder Synchronisierung der Signale wenigstens zweier induktiver Magnetfeldsensoren derart vorgesehen, dass auf einer Anzeige oder dergleichen ein zweidimensionales Bild der in einem zu inspizierendes oder inspiziertes flächigen Gewebe angeordneten Stabilisierung- und/oder Stützstrukturen dargestellt wird oder darstellbar ist.

Gemäß einer weiteren favorisierten Ausgestaltungsvariante eines erfindungsgemäßen Systems zur Inspektion von flächigem Gewebe wird vorgeschlagen, dass bei dem zumindest einen Permanentmagneten eines induktiven Magnetfeldsensors sich die magnetische Achse im Wesentlichen senkrecht zu seiner geometrischen Vorzugslängsachse erstreckt und zugleich die magnetische Achse des Permanentmagneten im Wesentlichen parallel zu der (lokalen) Transportrichtung verläuft. Dies schließt zumindest kleine, spitze Winkel zwischen der magnetischen Achse und der (lokalen) Transportrichtung ein. Auf diese Weise ist es möglich, einen insbesondere in Transportrichtung sehr kompakten (beschränkten) Bereich zu schaffen, in dem ein auf die an dem induktiven Magnetfeldsensor vorbeigeführten Stabilisierungs- und/oder Stützstrukturen eines zu inspizierenden oder inspizierten flächigen Gewebes wirksamer Kernbereich des Magnetfeldes des Permanentmagneten des induktiven Magnetfeldsensors mit einer in diesem Bereich betragsmäßig starken ebenso wie in der räumlichen Verteilung stark inhomogenen magnetischen Flussdichte konzentriert ist.

Bisher wurde im Zuge der vorstehenden Ausführungen zumeist vereinfachend vorausgesetzt, dass in dem flächigen Gewebe angeordneten Stabilisierung- und/oder Stützstrukturen bei der Inspektion eines flächigen Gewebes durch ein erfindungsgemäßes System zur Inspektion von flächigem Gewebe im Wesentlichen in bzw. parallel zu der Breite des flächigen Gewebes, also im Wesentlichen senkrecht zu der Längsrichtung des flächigen Gewebes bzw. senkrecht zur (lokalen) Transportrichtung verlaufen. Tatsächlich wird etwa eine Karkasse eines Reifens aus mehreren Lagen eines solchen flächigen Gewebes aufgebaut, wobei in verschiedenen Lagen die Stabilisierungs- und/oder Stützstrukturen in unterschiedlichen Richtungen verlaufen. Die in den Stücken flächigen Gewebes oder in einem aus solchen Stücken flächigen Gewebes ausgebildeten Gewebebandes angeordneten Stabilisierung- und/oder Stützstrukturen verlaufen dann in einem spitzen Winkel zu der Breite des jeweiligen Stücks flächigen Gewebes oder des Gewebebandes. Der oder die induktiven Magnetfeldsensoren eines erfindungsgemäßen Systems zur Inspektion von flächigem Gewebe sind dann für eine korrekte Inspektion von flächige Gewebe ebenfalls mit einem dementsprechenden spitzen Winkel zu der Breite anzuordnen. Dabei kann natürlich vorgesehen werden, dass die induktiven Magnetfeldsensoren mittels Winkelstellern automatisch und/oder zumindest fernbedient drehbar sind, wobei die Drehachse bei dieser Drehung vorzugsweise entlang einer (lokalen) Flächennormalen an die reguläre Fläche, in der oder auf der ein zu inspizierenden flächiges Gewebe entlang eines Transportweges geführt wird oder führbar ist, definiert ist.

Des Weiteren kann, wie Eingangs bereits beschrieben, die Inspektion eines flächigen Gewebes durch ein erfindungsgemäßes System zur Inspektion von flächigem Gewebe auch bei einem wenigstens eine (stetige) Krümmung, Wölbung oder dergleichen aufweisenden flächigen Gewebe erfolgen. Dies betrifft insbesondere den Fall, das entsprechendes flächiges Gewebe bereits gemäß der späteren (End-)Form als Teil einer Karkasse eines Reifens zumindest teilweise vorgeformt ist. Dazu ist es dann gegebenenfalls notwendig, die Anordnung der Sensoren und möglicherweise zusätzlich auch die Ausgestaltung der Sensoren selbst entsprechend der Krümmung, Wölbung oder dergleichen, angepasst auszubilden und/oder bei der Auswertung der Messsignale des oder der Sensoren entsprechend zu berücksichtigen. Gleiches gilt für einen explizit vorgegebenen gekrümmten und/oder allgemeinen nicht-gradlinigen Verlauf der Stabilisierung- und/oder Stützstrukturen innerhalb von flächigem Gewebe, wobei dieser vorgegebene Verlauf dementsprechend keinen Defekt darstellt und auch dann vorliegt, wenn ein solches flächiges Gewebe flach in/auf einer ebenen Fläche liegend angeordnet ist.

Die vorstehend in der Beschreibung genannten Merkmale und Merkmalskombinationen sind nicht nur in der jeweils angegebenen Kombination, sondern auch in anderen Kombinationen oder in Alleinstellung verwendbar. Zur Ausführung der Erfindung müssen nicht alle Merkmale des Anspruchs 1 verwirklicht sein. Auch können einzelne Merkmale des Anspruchs 1 durch andere offenbarte Merkmale oder Merkmalskombinationen ersetzt werden.

## Patentansprüche

1. System zur Inspektion von flächigem Gewebe mit einer regelmäßigen Anordnung im Wesentlichen parallel verlaufender sowie in der Gewebefläche angeordneter, drahtförmiger und elektrisch leitfähiger Stabilisierungs- und/oder Stützstrukturen, umfassend zumindest einen induktiven Magnetfeldsensor, Mittel zum Auswerten von Signalen des Magnetfeldsensors und Mittel zum Einstellen von Parametern, Schwellenwerten oder dergleichen für die Auswertung von Signalen des Magnetfeldsensors, wobei der zumindest eine induktive Magnetfeldsensor an einer Messstelle in einem Messbereich in einem definierten und/oder definierbaren Abstand zu einer regulären Fläche im Raum angeordnet ist und über diese reguläre Fläche mit einer Geschwindigkeit v zumindest ein Stück flächigen Gewebes, das flächig in oder auf der regulären Fläche angeordnet ist, entlang eines stetigen Transportweges mit einer (lokalen) Transportrichtung an dem Messbereich entlang geführt wird oder führbar ist, **dadurch gekennzeichnet, dass** der induktive Magnetfeldsensor zumindest einen Permanentmagneten und wenigstens eine um den Permanentmagneten axial umlaufende Spule umfasst, wobei der induktive Magnetfeldsensor dazu ausgebildet ist, mittels Induktion in den Stabilisierung- und/oder Stützstrukturen in der Spule ein gegeninduktives Antwortsignal zu erzeugen, wobei sukzessive im Wesentlichen nur ein Antwortsignal durch magnetische Induktion in einer der Stabilisierung- und/oder Stützstrukturen gleichzeitig erzeugbar ist oder erzeugt wird.

2. System zur Inspektion von flächigem Gewebe nach Anspruch 1, **gekennzeichnet dadurch, dass** das System zur Erkennung zumindest eines der folgenden Defekte im flächigen Gewebe ausgebildet ist:
a. Das Fehlen wenigstens einer der Stabilisierungs- und/oder Stützstrukturen;
b. Ein Überkreuzen zumindest zweier benachbarter Stabilisierungs- und/oder Stützstrukturen an wenigstens einer Stelle im Gewebe;
c. Eine globale Abweichung der vorgesehen Liniendichte der Stabilisierungs- und/oder Stützstrukturen in einem bestimmten Stück Gewebe innerhalb gewisser vorgegebener und/oder vorgebbarer Grenzen entlang des Transportweges;
d. Eine lokale Abweichung der vorgesehenen Liniendichte der Stabilisierungs- und/oder Stützstrukturen in einem definierten und/oder definierbaren Bereich innerhalb gewisser vorgegebener oder vorgebbarer Grenzen entlang des Transportweges;
e. Eine lokale Abweichung des vorgesehenen parallelen Verlaufs der Stabilisierungs- und/oder Stützstrukturen zumindest in einem lateralen Randbereich eines Stücks Gewebe;
f. Eine Lageabweichung zumindest einer der Stabilisierung- und/oder Stützstrukturen in vertikaler Richtung zu der regulären Fläche, in der oder auf der sich das Stück Gewebe befindet, innerhalb gewisser vorgegebener oder vorgebbarer Grenzen.

3. System zur Inspektion von flächigem Gewebe nach zumindest einem der Ansprüche 1 oder 2, **gekennzeichnet durch** eine Anordnung aus mindestens zwei induktiven Magnetfeldsensoren, wobei die induktiven Magnetfeldsensoren in einer Ebene senkrecht zu der (lokalen) Transportrichtung zueinander beabstandet angeordnet oder anordenbar sind.

4. System zur Inspektion von flächigem Gewebe nach zumindest einem der Ansprüche 1 bis 3, **gekennzeichnet durch** eine Anordnung aus mindestens zwei induktiven Magnetfeldsensoren, wobei die induktiven Magnetfeldsensoren entlang des Transportweges zueinander beabstandet angeordnet oder anordenbar sind.

5. System zur Inspektion von flächigem Gewebe nach zumindest einem der Ansprüche 1 bis 4, **gekennzeichnet durch** eine Anordnung von induktiven Magnetfeldsensoren in zumindest zwei entlang des Transportweges beabstandeter Ebenen, wobei die (lokale) Transportrichtung senkrecht zu der jeweiligen Ebene ist, derart, dass bei einer Projektion der jeweiligen Messbereiche aller in den Ebenen angeordneter induktiver Magnetfeldsensoren auf eine Schnittlinie durch das flächige Gewebe senkrecht zu einer (lokalen) Transportrichtung die Projektion wenigstens die gesamte Breite eines Stücks flächigen Gewebes entlang der Schnittlinie abdeckt.

6. System zur Inspektion von flächigem Gewebe nach zumindest einem der vorhergehenden Ansprüche 1 bis 5, **gekennzeichnet dadurch, dass** bei dem zumindest einen Permanentmagneten eines induktiven Magnetfeldsensors sich die magnetische Achse im Wesentlichen senkrecht zu seiner geometrischen Vorzugslängsachse erstreckt und zugleich die magnetische Achse des Permanentmagneten im Wesentlichen parallel zu der (lokalen) Transportrichtung verläuft.
